# EUROPEAN PATENT APPLICATION

(11) **EP 1 838 091 A2**
(43) Date of publication of application: **26.09.2007**
(21) Application number: 07005935.7
(22) Date of filing: 22.03.2007
(51) Int. Cl.: H04N 5/445

(54) **Method and device of displaying a time concept on a DTV electric program guide**

(30) Priority: 23.03.2006 US 277231
(71) Applicant: Realtek Semiconductor Corp., Science Park HsinChu (TW)
(72) Inventor: Lin, Yung-Hsian, Chang-Hua City (TW); Liu, Yu-Ying, Yonghe City Taipei Hsien (TW); Chang, Chia-Pei, Hsin-Chu City (TW)
(74) Representative: Weber, Joachim

(57) **Abstract**

A method is disclosed for displaying an electronic program guide. The electronic program guide includes a plurality of time attributes associated with a plurality of program attributes, respectively. The method disclosed for displaying an electronic program guide includes providing a plurality of time indicators; displaying at least a specific time attribute and its associated program attribute; and when the specific time attribute and its associated program attribute are selected, playing a specific time indicator associated with the selected specific time attribute.

## Description

### Background of the Invention

### 1. Field of the Invention

The present invention relates to a method and device for displaying DTV electronic program guides, and more specifically, to a method and apparatus for displaying DTV electronic program guides with a time concept indicator.

### 2. Description of the Prior Art

As is well known in the related art, a program guide, also known as an electronic program guide (EPG) can be embedded with a DTV (Digital Television) signal stream. In fact, broadcasting of a separate data packet in the transport stream for inclusion of a program guide is common practice. The users of DTV expect that program guides will be available to provide information about the many DTV channels and services. The information, such as: program channels, programming descriptions, broadcast times, and other similar information, enhances and makes more convenient the viewing experience for the end user utilizing DTV. However, a time concept associated with the EPG is not well enhanced and thus the users of DTV cannot tell the broadcast time of a program immediately.

### Summary of the Invention

It is therefore an objective of the claimed invention to provide a device for displaying an electronic program guide. According to an embodiment of the present invention, the device comprises: a database, for storing the time attributes and the program attributes, respectively; an output device; and a control circuit, coupled to the output device and the database, for controlling the output device to display at least a specific time attribute and its associated program attribute, and when the specific time attribute and its associated program attribute are selected, controlling the output device to play a specific time indicator, selected from a plurality of time indicators and associated with the selected specific time attribute.

It is therefore an objective of the claimed invention to provide a method for displaying an electronic program guide. According to an embodiment of the present invention, the method comprises: receiving a DTV signal stream; extracting a plurality of time attributes associated with a plurality of program attributes by parsing the signal stream; storing the plurality of time attributes and their associated program attributes in a database; receiving a control signal; utilizing a first layer for representing at least one of the plurality of time attributes and it's associated program attribute according to the control signal; utilizing a second layer for representing an icon according to the control signal; and displaying the electronic program guide by showing the merging result of the first layer and the second layer.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a block diagram illustrating an apparatus for displaying a time concept on a DTV electronic program guide (EPG) according to an embodiment of the present invention.
Fig. 2 is a diagram illustrating a screen showing the EPG in conjunction with the time indicator.
Fig. 3 is a diagram illustrating another screen showing the EPG in conjunction with the time indicator.
Fig. 4 is a flowchart showing a method for displaying a time concept on a DTV electronic program guide (EPG) according to an embodiment of the present invention.

### Detailed Description

Certain terms are used throughout the following description and claims to refer to particular system components. As one skilled in the art will appreciate, consumer electronic equipment manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to..." The terms "couple" and "couples" are intended to mean either an indirect or a direct electrical connection. Thus, if a first device couples to a second device, that connection may be through a direct electrical connection, or through an indirect electrical connection via other devices and connections.

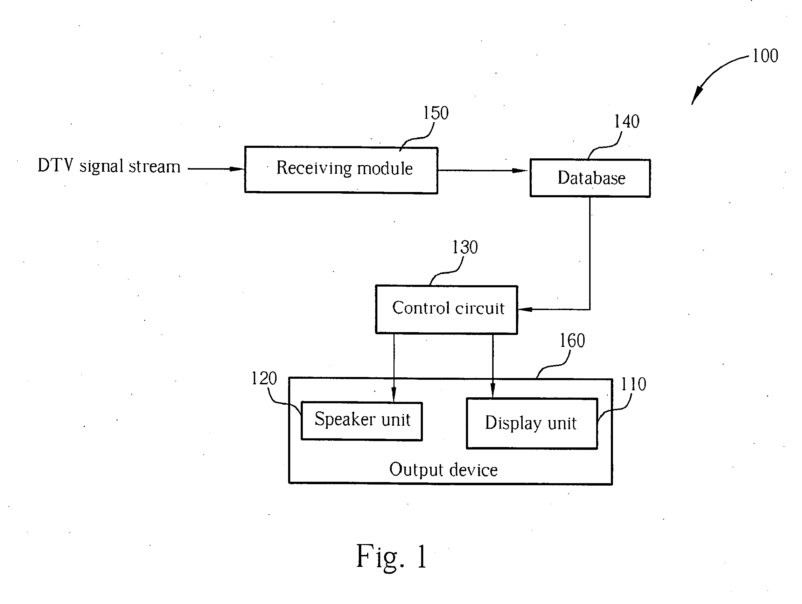

Please refer to Fig. 1. Fig. 1 is a block diagram illustrating an apparatus 100 for displaying a time concept on a DTV electronic program guide (EPG) according to an embodiment of the present invention. The device 100 for displaying an electronic program guide, such as a TV set, receives a DTV signal stream from a source. The source is typically a DTV broadcaster. In this embodiment, the electronic program guide complies with a digital television (DTV) standard.

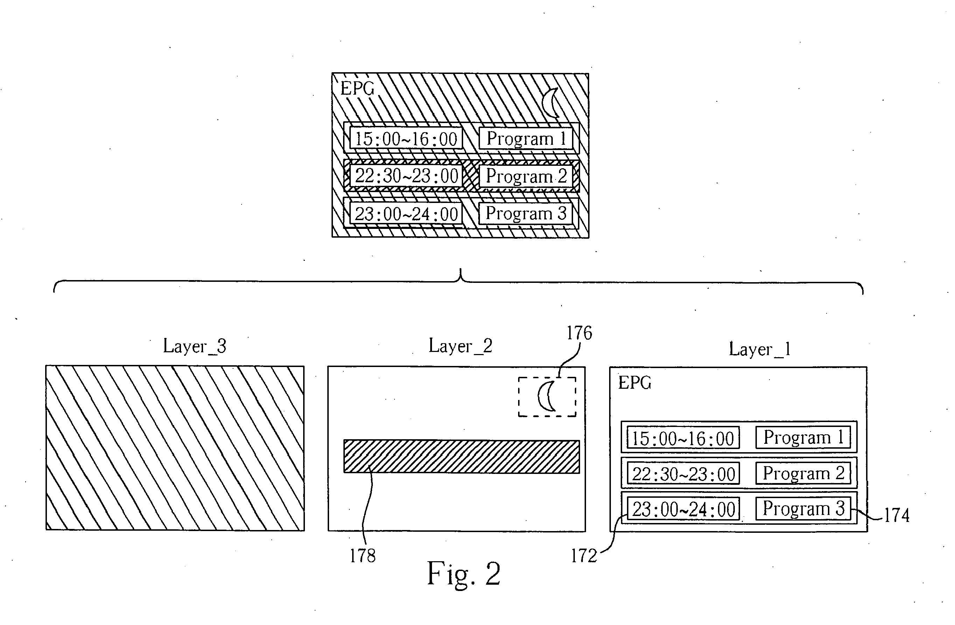

Specifically, the receiving module 150 accepts the inbound DTV signal stream. The receiving module 150 provides the functions of a tuner (not shown), demodulator (not shown), transport demux (not shown), and a parser (not shown). With the exception of the parser, it is obvious to one of average skill in the art the means whereby the receiving module 150 is able to provide these functions and therefore any detailed description is heretofore omitted for the sake of brevity. The parsing function offered by the receiving module 150 deserves additional description provided forthwith. The parsing function is for parsing the inbound DTV signal stream to extract a plurality of information that is later used for populating the database 140. The receiving module 150 is coupled to the database 140 as shown in Fig. 1, and by this link, the receiving module 150 transmits to the database 140 the parsing results. Additionally, information regarding the parsing operation and the population of database 140 is further described later in reference to Fig. 2. Briefly, it is sufficient to say now that the electronic program guide comprises a plurality of time attributes and that the time attributes are each associated with a plurality of program attributes, respectively. The time attributes and the program attributes must be stored post-parsing and the database 140 is the repository for said storage of the parsing operation. In this embodiment, the database can be implemented by utilizing a storage unit such as a buffer memory.

The database 140 is coupled to the receiving module 150 and the control circuit 130. The database 140 stores time attributes and associated program attributes. In this embodiment, for one program attribute, the corresponding time attribute includes a program start time and a program end time. When the specific time attribute and its associated program attribute are selected from the DTV EPG, for example by a user utilizing a remote control device as they view the EPG on a display unit 110, then the present invention controls the output device 160 to play a specific time indicator, selected from a plurality of time indicators and associated with the selected specific time attribute further associated with the selected specific EPG listing (i.e., program attribute). The database 140 is updated continuously as EPG data arrives embedded within the DTV signal stream. This ensures that the database 140 always contains the most recent EPG information that is available from the DTV broadcaster.

Continuing with Fig. 1, the device 100 for displaying an electronic program guide also includes an output device 160 having a speaker unit 120 and a display unit 110. The output device 160 is coupled to the control circuit 130. The speaker unit 120 plays audio data, and the display unit 110 plays video data. This is an example for not a limitation of the present invention. In another embodiment, the output device 160 can appear very different, perhaps with audio output (i.e., the speaker unit 120) disposed outside of the output device 160. In fact, the coupling among the control circuit 130 and the output device 120 including an audio device (e.g., the speaker unit 120) and a video device (e.g., the display unit 110) can be wireless. The many options for the configuration of DTV output is well know to a person of average skill in the related art and therefore additional examples are omitted here.

The control circuit 130 is coupled to the database 140 and the output device 160. The control circuit 130 accesses the database 140 to find a specific time frame including the program start time and the program end time of the selected specific time attribute to determine the specific time indicator corresponding to the specific time frame. Please note, each time indicator corresponds to a time frame. The control circuit 130 controls the display unit 110 in the output device 160 to display at least a specific time attribute and its associated program attribute, and when the specific time attribute and its associated program attribute are selected, the control circuit 130 further controls the output device 160 to present to the user a specific time indicator, selected from a plurality of time indicators and associated with the selected specific time attribute.

Furthermore, the control circuit 130 is used for dividing a day into a plurality of time frames. Next, the control circuit 130 is used for associating the time frames with the time indicators. In the present embodiment, the control circuit 130 is used for finding a specific time frame having the frame start time least different from the program start time of the selected specific time attribute to determine the specific time indicator corresponding to the specific time frame. This is utilized to ensure that the time indicator presented to the user is the time indicator most closely associated with the time when the program will be broadcast. By way of example, and not limitation, the present invention can perform the above-mentioned functions. It will be obvious to one of average skill in the related arts that many embodiments are possible and that those embodiments obey the spirit of the present invention. For example, the particulars of deciding a most appropriate time frame for displaying a most appropriate time indicator are a matter of personal opinion. The user can easily integrate variables such as these, and many more, thereby making the present invention method and apparatus tailored to the user's personality and thereby ensuring maximum enjoyment of the present invention.

Please note that each time indicator can be an icon, a sound, an animated icon or graphic, or any combination of these items. The actual time indicator is for use by the end user to help the end user more quickly identify a time concept. In other words, if the time indicator includes video information, the control circuit 130 drives the display unit 110 to present the video information to the end user; however, if the time indicator includes audio information, the control circuit 130 drives the speaker unit 110 to present the audio information to the end user. It is in the spirit of the present invention that any icon or such similar means for conveying the time concept is considered valuable and appropriate. In another embodiment, the end user can modify the time concept icon to personally satisfy their needs and their style.

In another embodiment, it is not necessary that the EPG's time attributes and program attributes be display by the display unit 110 on a same output layer as the icon. The concept of offering a plurality of display layers whereon specific items are assigned to specific layers is a powerful feature. Please refer to Fig. 2. Fig. 2 is a diagram illustrating a screen showing the EPG in conjunction with the time indicator. In this embodiment, the time attributes 172 and associated program attributes 174 are defined on a first layer layer_1. As shown in Fig. 2, the time attribute "15:00 ~ 16:00" and its associated program attribute "PROGRAM 1" are the selected time attribute and the selected program attribute. A highlight region 178 on layer_2 of Fig. 2 indicates the selection. When the layers are blended, the highlight region 178 will mesh with the corresponding area of layer_1 where program_1 is drawn. Therefore, the control circuit 130 defines the icon 176 (i.e., the time indicator) on a second layer layer_2 along with the highlight region 178. In addition to the first and second layers layer_1, layer_2, the control circuit 130 can use a third layer layer_3 to define the background. In this embodiment, the control circuit 130 blends the first, second and third layers layer _1, layer_2, layer_3 to drive the display unit 110 to display the icon 176, the time attributes 172, the associated program attributes 174, and the highlight region 178, as a cohesive image for use by the user. The layering technique is powerful and therefore it does increase the hardware complexity, for example, the hardware complexity of the control circuit 130 is increased to accommodate layering overhead calculations. However, this increase in complexity is minimized. As a benefit of the layer approach, it is easy to change the time indicator very frequently thereby resulting in many frequent redraws of the icon. Please note, for the sake of descriptive clarify, a static icon is used here as the example, however, any icon as previously described, even those including full-motion video animation and sound, are considered to be "icons" by the present invention. Because of the layer technique, it is possible to redraw only the icon on the interested layer rather than a full-picture redraw that would include background images, text, and icons if said layer technique is not implemented. Please note that the present invention is capable of performing in both a layered and non-layered environment.

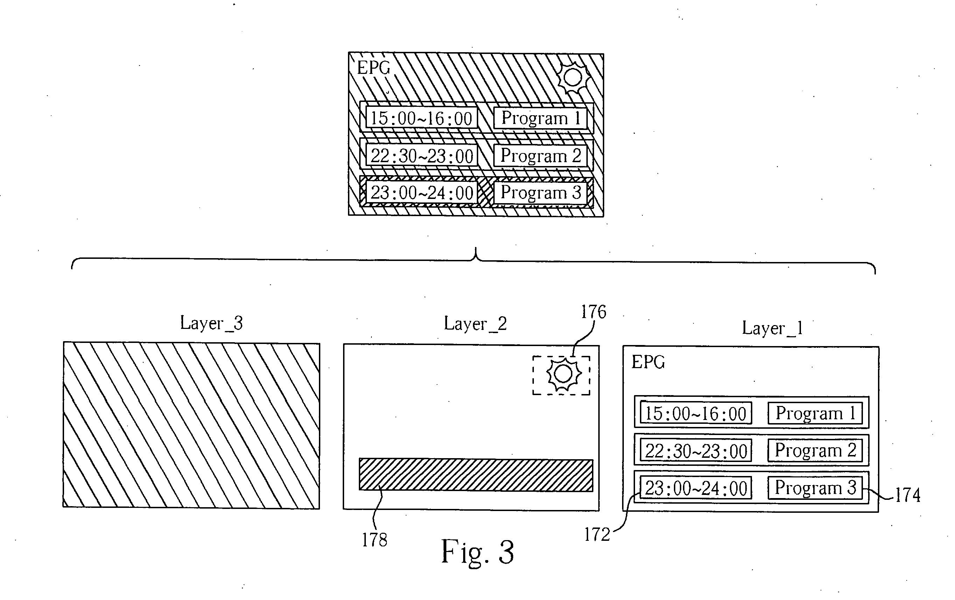

As an example to further illustrate the operation of changing the selected program, please refer to Fig 3. Fig. 3 is a diagram illustrating a screen showing the EPG of Fig. 2 after the highlight region 178 (i.e., the selection) is changed to a different time attribute and it's associated program attribute change from the time attribute "15:00~ 16:00" and its associated program attribute "PROGRAM1" to the time attribute "22:30~ 23:00" and its associated program attribute "PROGRAM2", only the highlight region 178 and the icon 176 on layer 2 need to be redrawn. Specifically, the icon 176 shown in Fig. 2 is updated to be a new image as shown by the icon 176 in Fig. 3 as well as the highlight region 178 moving to its new location.

For another example, if there exists time frames from 00:00 (midnight) through 06:00 (a.m.) this time frame can be associated with a star icon. In other words, the time frame from midnight to 6 a.m. is associated with the time concept having the star icon. By way of example, and not limitation, the present invention utilizes said star icon for period 00:00 through 06:00. The star icon can be static, include animation, and comprise any number of colors. Enhancing the star icon to include other elements that help convey the time concept also obeys the spirit of the present invention. For example, sound effects can be included with a time concept icon. Any inclusion of these additional special effects helps the end user more quickly associate a particular program broadcast with a specific time concept by appealing to the end user's sense of sight and sound.

As a third example to further explain the present invention, consider the period 12:00 through 18:00. Suppose that this period has a corresponding time concept icon that is an icon of the sun. The time concept identifier sun icon can include colors, such as bright yellows and oranges. The sun icon can also include animation, such as pulsating sunrays emanating from around the sun's perimeter. The sun icon can also include sound, such as a looping sound clip that evokes in the end user the desired time concept; in this case: daytime. It is obvious to those of average skill in the art that the time concept icons are not limited to those examples set forth here.

Please note that the end user can modify the periods and the time concept icons. For example, the user can shorten the default 06:00 through 12:00 time frame to become 06:00 through 11:00 and the user can lengthen the subsequent time frame by the same amount such that 11:00 through 18:00 is the user's customized period. The spirit of the present invention can easily satisfy these user modifications.

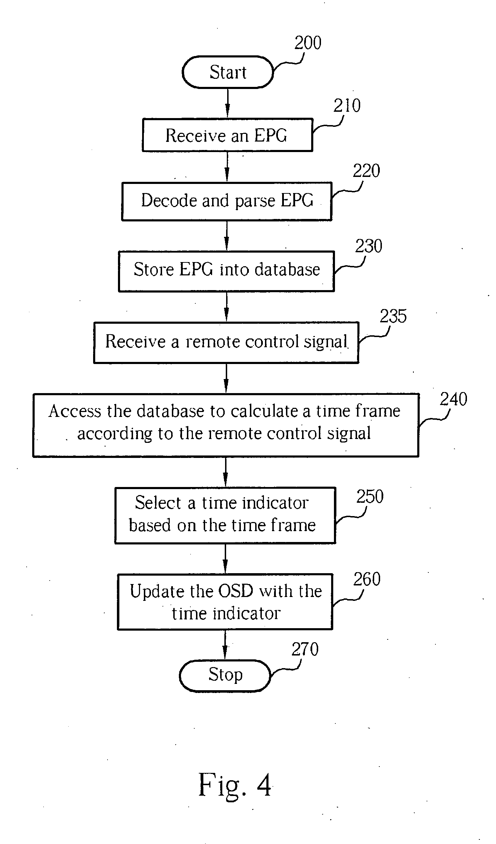

Please refer to Fig. 4. Fig. 4 is a flowchart showing a method for displaying a time concept on a DTV electronic program guide (EPG) according to an embodiment of the present invention.

The method of the present invention comprises the following steps:
Step 200: Start.
Step 210: Receive an EPG
Step 220: Decode and parse the EPG
Step 230: Store the EPG into a database.
Step 235: Receive a remote control signal.
Step 240:According to the remote control signal, access the database to obtain a program attribute and it's associated time attribute which comprises a start time; and calculate a time frame in response to the start time.
Step 250: Select a time indicator based on the time frame.
Step 260: Update the on screen display (OSD) with the time indicator.
Step 270: Stop.

The following is an example illustrating the operation of the flow of the present invention shown in Fig. 4. In step 200, the method begins. In step 210, an EPG is received in the form of a digital signal DTV stream. The electronic program guide complies with a digital television (DTV) standard.

In step 220, the EPG is decoded and parsed. The electronic program guide includes a plurality of time attributes associated with a plurality of program attributes, respectively wherein each time attribute further includes a program start time and a program end time, each time indicator corresponds to a time frame, furthermore, each time attribute comprises a program start time, each time indicator corresponds to a time frame comprising a frame start time.

In step 230, the decoded and parsed EPG is stored into the database 140 shown in Fig. 1. As the method continues, the database 140 is updated with newly decoded and parsed EPGs. In this way, the database 140 will contain the most recent EPG information. Note that, each time attribute comprises a program end time, each time indicator corresponds to a time frame comprising a frame end time. The EPG is stored into the database 140 such that a day is dividing into a plurality of time frames.

In Step 235, the present invention receives a remote control signal.

In step 240, the database is accessed, according to the remote control signal, to obtain a program attribute and it's associated time attribute which comprises a start time. To provide an optimal time frame for the programming entries of the EPG, the present invention divides a day into a plurality of time frames and associates the time frames with the time indicators. An optimal time frame is calculated in response to the start time.

In step 250, the time indicator is selected based on the time frame. This includes finding a specific time frame including one of the program start time and the program end time of the selected specific time attribute to determine the specific time indicator corresponding to the specific time frame. Finding the best match time indicator icon involves finding a specific time frame having the frame start time least different from the program start time of the selected specific time attribute to determine the specific time indicator corresponding to the specific time frame. Alternatively, this step can be for finding a specific time frame having the frame end time least different from the program end time of the selected specific time attribute to determine the specific time indicator corresponding to the specific time frame.

In step 260, the on screen display is updated with the time indicator. The time indicator can be an icon. Additionally, the time indicator can be an audio segment. The audio segments of the time indicators are different to properly notify the end user. Finally, the time indicator can be any combination of still image, motion video animated image, audio sound or audio sounds, or any combination of any of these items. The step of updating the on screen display can happen when the specific time attribute and the user selects its associated program attribute. As the user makes EPG selections based on the display of the display unit 110, the present invention plays a specific time indicator associated with the selected specific time attribute.

Please recall from previous descriptions, that one or more layers can define the on screen display. For example, the specific time attribute and its associated program attribute can be defined on a first layer, and the icon can be defined on a second layer, and the method for step 260 then further comprises blending the first and second layers to present to the user the icon, the specific time attribute, and its associated program attribute on the output device 160. Please note that the icon can be a sound or sounds, therefore the icon is "presented" to the user utilizing the output device 160 whereby the icon can optionally utilize either or both the speaker unit 120 and display unit 110.

In step 270, the flow of the present invention method stops.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for displaying an electronic program guide, the electronic program guide comprising a plurality of time attributes associated with a plurality of program attributes, respectively, the method comprising:
providing a plurality of time indicators;
displaying at least a specific time attribute and its associated program attribute; and
when the specific time attribute and its associated program attribute are selected, playing a specific time indicator associated with the selected specific time attribute.

2. The method of claim 1, wherein each time attribute comprises a program start time and a program end time, each time indicator corresponds to a time frame, and the step of playing the specific time indicator comprises:
finding a specific time frame including one of the program start time and the program end time of the selected specific time attribute to determine the specific time indicator corresponding to the specific time frame.

3. The method of claim 2, wherein the step of providing the time indicators further comprises:
dividing a day into a plurality of time frames; and
associating the time frames with the time indicators.

4. The method of claim 1, wherein each time attribute comprises a program start time, each time indicator corresponds to a time frame comprising a frame start time, and the step of playing the specific time indicator comprises:
finding a specific time frame having the frame start time least different from the program start time of the selected specific time attribute to determine the specific time indicator corresponding to the specific time frame.

5. The method of claim 4, wherein the step of providing the time indicators further comprises:
dividing a day into a plurality of time frames; and
associating the time frames with the time indicators.

6. The method of claim 1, wherein each time attribute comprises a program end time, each time indicator corresponds to a time frame comprising a frame end time, and the step of playing the specific time indicator comprises:
finding a specific time frame having the frame end time least different from the program end time of the selected specific time attribute to determine the specific time indicator corresponding to the specific time frame.

7. The method of claim 6, wherein the step of providing the time indicators further comprises:
dividing a day into a plurality of time frames; and
associating the time frames with the time indicators.

8. The method of claim 1, wherein each time indicator comprises an icon.

9. The method of claim 8, wherein the specific time attribute and its associated program attribute are defined on a first layer, and the icon is defined on a second layer, and the method further comprises blending the first and second layers to display the icon, the specific time attribute and its associated program attribute.

10. The method of claim 8, wherein each time indicator further comprises an audio segment.

11. The method of claim 1, wherein each time indicator comprises an audio segment, and audio segments of the time indicators are different.

12. The method of claim 1, wherein the electronic program guide complies with a digital television (DTV) standard.

13. A device for displaying an electronic program guide, the electronic program guide comprising a plurality of time attributes associated with a plurality of program attributes, respectively, the device comprising:
a database, for storing the time attributes and the program attributes, respectively; an output device; and
a control circuit, coupled to the output device and the database, for controlling the output device to display at least a specific time attribute and its associated program attribute, and when the specific time attribute and its associated program attribute are selected, controlling the output device to play a specific time indicator, selected from a plurality of time indicators and associated with the selected specific time attribute.

14. The device of claim 13, wherein each time attribute stored in the database comprises a program start time and a program end time, each time indicator corresponds to a time frame, and the control circuit accesses the database to find a specific time frame including one of the program start time and the program end time of the selected specific time attribute to determine the specific time indicator corresponding to the specific time frame.

15. The device of claim 14, wherein the control circuit further divides a day into a plurality of time frames; and associates the time frames with the time indicators.

16. The device of claim 13, wherein each time attribute comprises a program start time, each time indicator corresponds to a time frame comprising a frame start time, and the control circuit further finds a specific time frame having the frame start time least different from the program start time of the selected specific time attribute to determine the specific time indicator corresponding to the specific time frame.

17. The device of claim 16, wherein the control circuit further divides a day into a plurality of time frames and associates the time frames with the time indicators.

18. The device of claim 13, wherein each time attribute comprises a program end time, each time indicator corresponds to a time frame comprising a frame end time, and the control circuit further finds a specific time frame having the frame end time least different from the program end time of the selected specific time attribute to determine the specific time indicator corresponding to the specific time frame.

19. The device of claim 18, wherein the control circuit further divides a day into a plurality of time frames and associates the time frames with the time indicators.

20. The device of claim 13, wherein each time indicator comprises an icon.

21. The device of claim 20, wherein the specific time attribute and its associated program attribute are defined on a first layer, the icon is defined on a second layer, and the control circuit further blends the first and second layers to drive the output device to display the icon, the specific time attribute and its associated program attribute.

22. The device of claim 20, wherein each time indicator further comprises an audio segment.

23. The device of claim 22, wherein each time indicator comprises an audio segment, and audio segments of the time indicators are different.

24. The device of claim 13, wherein the electronic program guide complies with a digital television (DTV) standard.

25. A method for displaying an electronic program guide, comprising:
receiving a signal stream;
storing a plurality of time attributes associated with a plurality of program attributes by processing the signal stream;
receiving a control signal;
utilizing a first layer for representing at least one of the plurality of time attributes and it's associated program attribute according to the control signal;
utilizing a second layer for representing an indicator according to the control signal; and
displaying the electronic program guide by merging the first layer and the second layer.

26. The method of claim 25, wherein the indicator relates to the time attribute and it's associated program attribute of the first layer.

27. The method of claim 25, further comprising a step of determining a time frame corresponding to the time attribute of the first layer.

28. The method of claim 27, wherein the step of representing the indicator further comprises:
utilizing the second layer for representing the indicator according to the time frame.

29. The method of claim 25, wherein the electronic program guide complies with a digital television (DTV) standard.

30. A device for displaying an electronic program guide, comprising:
a receiving module, for receiving and processing a signal stream, so as to obtain a plurality of time attributes associated with a plurality of program attributes;
a storage unit, coupled to the receiving module, for storing the plurality of time attributes and the plurality of program attributes;
a control circuit, coupled to the storage unit, for utilizing a first layer for representing at least one of the plurality of time attributes and it's associated program attribute, and for utilizing a second layer for representing an indicator according to a control signal; and
a display unit, coupled to the control circuit, for displaying the electronic program guide by merging the first layer and the second layer.

31. The device of claim 30, wherein the indicator relates to the time attribute and it's associated program attribute of the first layer.

32. The device of claim 30, wherein the storage unit determines a time frame corresponding to the time attribute of the first layer, and utilizes the second layer for representing the indicator according to the time frame.

33. The device of claim 30, wherein the electronic program guide complies with a digital television (DTV) standard.
